# EUROPEAN PATENT APPLICATION

(11) **EP 1 231 788 A1**
(43) Date of publication of application: **14.08.2002**
(21) Application number: 01200506.2
(22) Date of filing: 12.02.2001
(51) Int. Cl.: H04N 7/16, H04N 7/173

(54) **Arrangement for distributing content, profiling center, receiving device and method**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

An arrangement (100) for distributing content (200), comprising an aggregator (101) arranged for bundling the content (200) according to a segment profile (209) and distributing the content (200) to a receiving device (120), the receiving device (120) comprising user profile maintenance means (210) for maintaining a user profile (211), and profile transmitting means (212) for transmitting the user profile (211) to a profiling center (220), the profiling center (220) being arranged for aggregating user profiles (211) received from plural receiving devices (120) into an aggregated profile (221), and for making the aggregated profile (221) available to the aggregator (101) for use as the segment profile (209). Also a method of profiling consumer behavior.

## Description

The invention relates to an arrangement for distributing content, and to a profiling center and a receiving device for use in such an arrangement.

The invention further relates to a method of profiling consumer behavior.

Known arrangements for distributing content typically involve at least three entities. First, there is a content owner, who makes content items such as television programs, movies, songs, articles or books available. Second, an aggregator collects content items from one or more content owners and makes them available for distribution. The aggregator typically collects and distributes the content items according to a profile of some sort. Such profiles are used to divide the market into segments. For instance, an aggregator may collect music from various music labels, and produce compact discs according to genre (such as pop music, jazz, or rock). Another aggregator, a cable TV network, may collect television programs from studios and make them available on different channels according to some classification (such as children's programs, western movies, science fiction series or adult movies). A consumer, the third entity, can access these bundles and purchase one or more content items from them. This makes it easy for a consumer to select content items he likes. The cable TV network may offer different subscription packages, for instance only the science fiction channels, or the adult channel.

Another possibility for collecting content items is according to segmentation of target groups. Typically, such segmentation is done based on statistical information related to average incomes in various districts or cities, or by dividing the population into groups based on age, gender or interest. This is popular with, amongst others, magazines. A magazine publisher often brings out different magazines for young children, teens, housewives and senior citizens. Another publisher may have different magazines for people interested in fishing, gardening or airplanes.

To increase the accuracy of their segmentation profiles, aggregators may send out questionnaires to consumers, or use program ratings (such as the well-known Nielsen ratings) to see what consumers like. Using this information, they can adapt their profiles and thereby increase the value of the bundles generated using these profiles. For instance, an aggregator may find that a particular cartoon, such as the popular show *The Simpsons,* which initially was broadcast only on the children's channel, is also enjoyed by adults, and then decide to broadcast this cartoon in the comedy channel for adults.

While all these types of bundling do provide some type of segmentation of the market, the profiles used are not very accurate. A computer magazine may want to cater to both inexperienced and expert users to get a larger market share, but then risks alienating both types of users because some articles are either too sophisticated or not sophisticated enough, respectively. A cable TV network often bundles a lot of differing content items into one channel, simply because they are all "science fiction" or "westerns". Consumers, however, may have a different opinion on what is a "western", and so the value of this bundle becomes lower to them. The main reason for these problems is that the profiles used are too coarse-grained.

It is an object of the invention to provide an arrangement for distributing content, in which population segments are targeted using highly accurate consumer segment profiles.

This object is achieved according to the invention in an arrangement comprising an aggregator arranged for bundling the content according to a segment profile and distributing the content to a receiving device, the receiving device comprising user profile maintenance means for maintaining a user profile, and profile transmitting means for transmitting the user profile to a profiling center, the profiling center being arranged for aggregating user profiles received from plural receiving devices into an aggregated profile, and for making the aggregated profile available to the aggregator for use as the segment profile. Preferably metadata related to the content is embedded into the content by means of a watermark. The profiling center can correlate the user profiles for the consumers who listened, watched, and/or bought the content, and thereby can create enhanced profiles for these consumers. The aggregated information can be made available to the content aggregator so that he can more accurately make his content available.

It is a further object of the invention to provide a profiling center for use in the arrangement according to the invention, which can create and maintain highly accurate consumer segment profiles.

This object is achieved according to the invention in a profiling center, being arranged for aggregating user profiles received from plural receiving devices into an aggregated profile, and for making the aggregated profile available to an aggregator for use as a segment profile. Preferably the profiling center is further arranged to additionally aggregate a rights profile received from a rights clearinghouse into the aggregated profile, and/or to additionally aggregate a financial profile received from a financial clearinghouse into the aggregated profile. The information stored in the individual user profiles reveals a lot about the users, and the information from these clearinghouses reveals even more. By aggregating all this information, highly accurate aggregated profiles are obtained. Due to their high accuracy, they are very valuable to content aggregators, advertising agencies and other parties. Anyone who is in the business of distributing content to a segment of a large user group needs accurate profiles for the people that make up the segment, the profiles preferably being as detailed and fine-grained as possible.

It is a further object of the invention to provide a receiving device for use in the arrangement according to the invention, which facilitates the creation and maintenance of highly accurate consumer segment profiles.

This object is achieved according to the invention in a receiving device comprising user profile maintenance means for maintaining a user profile, and profile transmitting means for transmitting the user profile to a profiling center. By making his user profile available, the user allows the content distributor to more accurately make content that is of interest to him available to him, which is a benefit to the user.

In an embodiment the profile transmitting means are arranged for transmitting only a portion of the user profile which has been modified since a previous transmission of the user profile. This saves bandwidth and also provides information on what has recently changed in the user's preferences.

It is a further object of the invention to provide a method of profiling consumer behavior, which results in highly accurate consumer profiles.

This object is achieved according to the invention in a method comprising receiving user profiles from plural receiving devices, aggregating said received user profiles into an aggregated profile, and making the aggregated profile available to an aggregator for use as a segment profile. Preferably, a rights profile received from a rights clearinghouse, and/or a financial profile received from a financial clearinghouse are also aggregated into the aggregated profile. The information stored in the individual user profiles reveals a lot about the users, and the information from these clearinghouses reveals even more. By aggregating all this information, highly accurate aggregated profiles are obtained. The aggregated profiles are very valuable to content aggregators, advertising agencies and other parties. Thus, it makes good business sense to sell the aggregated profiles to any interested party for a fee. A recurring revenue opportunity is the selling of updated aggregated profiles regularly.

These and other aspects of the invention will be apparent from and elucidated with reference to the embodiments shown in the drawings, in which:
Figure 1 schematically shows an arrangement according to the invention; and
Figure 2 schematically shows a second embodiment of the arrangement.

Throughout the figures, same reference numerals indicate similar or corresponding features. Some of the features indicated in the drawings are typically implemented in software, and as such represent software entities, such as software modules or objects.

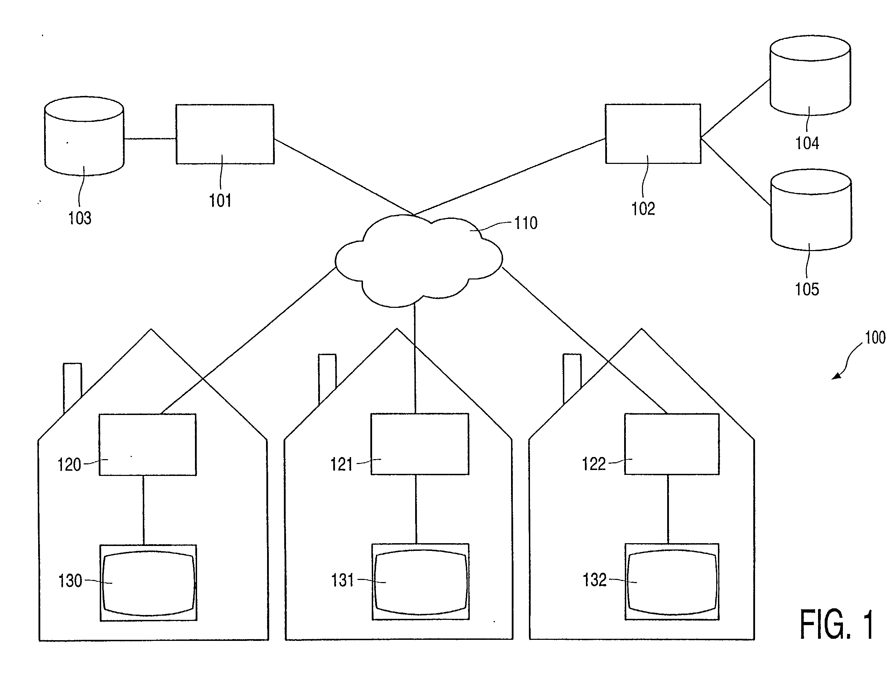

Figure 1 schematically shows an arrangement 100 for distributing content. In this arrangement 100, content providers 103, 104, 105 make content items available. These content providers 103, 104, 105 may be movie houses, music record labels, printing houses, but also individual artists, performers, writers or other creative people. They make the content items, such as television programs, movies, songs, articles, books, games, images or other material, available to aggregators 101, 102. An aggregator 101 can for instance be a publishing house which collects articles from a variety of content providers and publishes a journal comprising those articles. It may also be a TV network which buys television programs and movies from content providers and programs these for distribution to viewers.

The aggregator 101, 102 typically bundles the content items according to a profile for a specific segment of the population. For instance, an aggregator may collect music from various music labels, and produce compact discs according to genre, such as pop music, jazz, techno or rock. In another instance a cable TV network collects television programs from various studios and makes them available on different channels according to some classification, such as children's programs, western movies, science fiction series or adult movies. The above-mentioned publishing house may collect articles on gardening from various writers, and bundle them to produce the Gardening Weekly magazine.

To aid in the bundling of content items, it is necessary to have metadata. Metadata is data about the data, in this case data about the content items. Using metadata the content items can be selected, filtered and processed. The metadata can be directly related to the content item, or be indirectly related. Examples of directly related metadata are:
- Title of the song / movie;
- Name of the artist, band, orchestra, conductor or other performer(s);
- Name of the composer(s) or songwriter(s);
- Genre of the content (pop, jazz, comedy, documentary, western, etc);
- Name of the songwriter;
- Lyrics.

Examples of indirectly related metadata are:
- Information on upcoming concerts by the same performer(s);
- Other releases by the same performer(s);
- Special offers related to the content item;
- Merchandising articles like T-shirts.

The metadata can be added to the content items in a variety of ways. It is preferred to add the metadata by embedding it in the content using a watermark. Since a watermark cannot be easily removed, this ensures that the metadata and the content item cannot be separated easily. In an alternative embodiment, they are simply provided as textual data accompanying to the content items. In another alternative embodiment, the metadata and the content item can be put together in an encrypted "container" which can only be opened by trusted recipients. These recipients have agreed not to distribute the content item without the accompanying metadata.

Additionally, metadata related to digital rights management (DRM) can be inserted. Using DRM, a content provider 103, 104, 105 can indicate user rights for a content item. Playback devices must adhere to restrictions of those rights by for instance refusing to copy a content item if DRM-related metadata indicates that the content item is not to be copied. The metadata may also indicate the number of copies that may be made or the number of times the content item may be played. Using DRM-related metadata, content providers and aggregators can work out various business models for selling or renting content items. The targeting of the market segments based upon these business models will become much more effective by adapting the metadata based upon the feedback of the profiling system.

The metadata can also be used to activate an additional activity. For instance, a Uniform Resource Locator (URL) for a World-Wide Web resource containing more information associated with the content item can be embedded, as is described in US 5,841,978. A playback device can, upon receiving the content item with the embedded extra information, decode the URL and fetch the associated resource for displaying it to the user.

The directly related metadata is preferably embedded by the content providers 103, 104, 105, since they are the entity which knows best what kind of content item is being dealt with. Further, if the metadata is added at the origin of the content, it is more likely that other parties in the distribution chain will use the metadata in that format, since this is more convenient than translating the metadata into another format. This means that those other parties will standardize on that one format, which makes it easier to exchange information related to the metadata, such as profiles built with it. It also allows one party to send requests for a particular piece of content to another party in a format that other party will understand. This puts the content providers 103, 104, 105 in a position to control the format of the metadata. Of course, the format of the metadata can also be standardized by an external standards body. One known suitable format for metadata is the Resource Description Format (RDF), developed by the World-Wide Web Consortium (W3C), a specification of which is available on the Internet at the address http://www.w3.org/RDF/.

Indirectly related metadata can be embedded by the content provider 103, 104, 105, but the aggregator 101, 102 is also in a position to do so. The metadata he inserts can be related to advertisements, for instance information on upcoming concerts including the location of a point of sale for tickets. The aggregator 101, 102 may also insert metadata related to its own marketing focus, whereas the content provider 103, 104, 105 typically only inserts metadata only related to the content items. For instance, an aggregator who distributes songs having a common theme may want to add metadata identifying that theme. The aggregator can also add hyperlinks offered via portals, search engines etc. to create a quick survey of interesting material, links to other songs by the same performer(s) or links to related live events which are available.

The aggregator 101, 102 make the content items available to consumers. It is to be expected that consumers can download the content items through a network 110 of some sorts, preferably the Internet. To this end, consumers will have a receiving device 120, 121, 122 such as a set-top box or residential gateway in their homes. More and more content items are made available through more and more channels, and this amount will only increase in the near future. To enable a consumer to view only those content items he likes, his receiving device 120, 121, 122 employs a filtering mechanism. Such a filtering mechanism keeps record of the users' preferences and interest. This kind of interest is stored in a so-called user profile for a user. A user profile comprises metadata with several attributes, which can have values indicating the user's interest, lifestyle, and so on. The filtering mechanism compares content items that are available against the user profile, and presents the content items that "fit" the user profile to the user. The receiving device 120, 121, 122 can also automatically record any content item that fits the user profile, so that the user can view those content items at the time and in the order he desires. A possible way of visualizing such a profile is the use of a visual agent. Such an agent can give advice, suggest programs or help in another way to let the user find information of interest.

However, this only works well if the user profile matches the user. When the user has only recently started using the system, there is little information from which to build a user profile. Therefore, these systems are often provided with starting profiles, which match average users from different population groups. For example, there could be a starting profile matching kids aged 12-16 years, one matching people interested in history or nature, and one matching sports lovers. European patent application 00202643.3 (attorney's docket PHNL000414) by the same applicant as the present application provides a method and system for determining a starting profile for a user. A first set of generic profiles is presented, from which the user makes a selection. Next "generations" of profiles are created based upon previous ones, preferably using a genetic algorithm. Each next generation will be more suited to the user's preferences, because the relevant attributes are passed on to this next generation. Presentation of the profiles can be adapted to the attributes, so that the user can visually recognize each profile and make a more informed selection.

The metadata accompanying the content item can be used to perform other actions, such as presenting a special offer or fetching an Internet URL that was present in the metadata. If DRM-related metadata is present, the receiving device, and if appropriate the rendering device connected to it, must ensure the indicated restrictions are enforced. The metadata may also be used to build a database of previously received content items. The consumer can then browse this database created by filtering and matching procedures and use it to request it again, or to find out more about it.

A content item which is selected by the filter is then rendered on rendering device 130, 131, 132. The exact way in which a content item is rendered depends on the type of content processing system and the type of content. For instance, in a radio receiver, rendering comprises generating audio signals and feeding it to loudspeakers. For a television receiver, rendering comprises generating audio and video signals and feeding those to a display screen and loudspeakers. For other types of content, a similar appropriate action must be taken. Rendering may also include operations such as decrypting or descrambling the signal, synchronizing audio and video signals and so on. This may require additional devices, such as a smartcard reader which gives access to decryption keys or a descrambling box which produces an unscrambled signal that can be rendered properly.

Of course the arrangement 100 is not limited to consumers receiving content only in their home. When wireless broadband services such as UMTS are available, it becomes possible for a mobile device to operate as a receiving device as outlined above. It is then very likely that this mobile device will also operate as a rendering device, although it is conceivable that the mobile device employs an auxiliary rendering device with wireless reception capabilities, as described in European patent application 00204134.1 (attorney's docket PHTW000008) by the same applicant. Using his mobile device, a consumer can then access the offered content items anywhere.

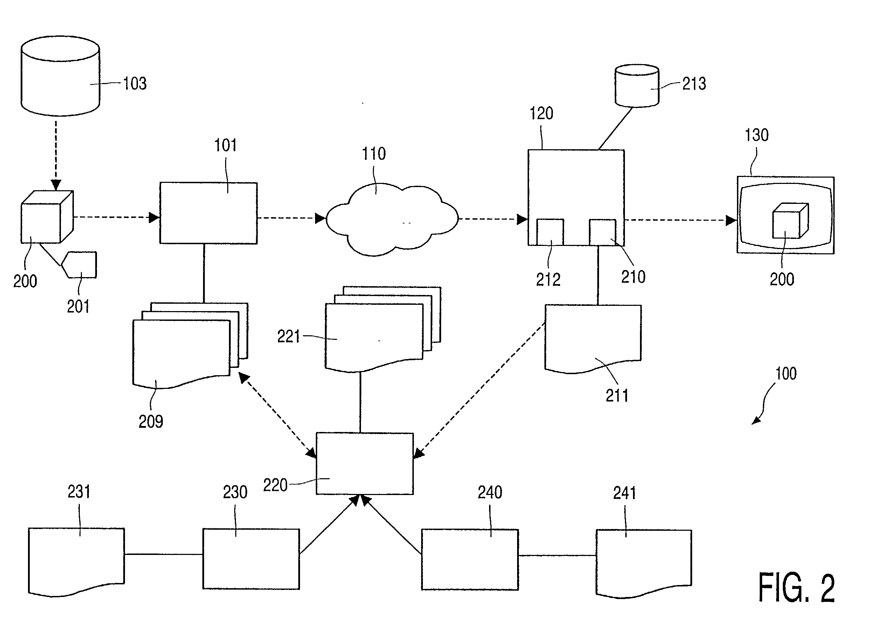

Figure 2 schematically shows a portion of the arrangement 100 in more detail. As explained above, aggregator 101 obtains a content item 200, with accompanying metadata 201 from content provider 103 and makes it available through distribution network 110. Receiving device 120 receives the content item 200, and rendering device 130 then renders the content item 200 to the consumer.

The receiving device 120 comprises a user profiling module 210 which maintains a user profile 211. This user profiling module 210 can access the metadata 201 accompanying the content item 200, for example by obtaining it from the watermark embedded in the content item 200, and use the metadata 201 to filter the content item 200. If the metadata 201 indicates that the consumer likes this content item 200, the user profiling module 210 arranges for the content item 200 to be available for rendering on the rendering device 130. It may to this end record the content item 200 on local storage 213, or cause a notification to be presented to the consumer that an interesting content item is available. Should the consumer indicate he does not like the content item 200, the user profiling module 210 updates the user profile 211 to reflect this. The consumer can, in a preferred embodiment, also edit the user profile 211 himself, to indicate his likes and dislikes.

The arrangement 100 of the embodiment shown additionally comprises a profiling center 220. The profiling center 220 collects profiling data from a plurality of sources and aggregates this profiling data into aggregated profiles 221. To this end, in one preferred embodiment, the receiving device 120 comprises profile transmitting module 212, which transmits the user profile 211 to the profiling center 220 at regular intervals. In an alternative embodiment, the profiling center 220 contacts the receiving device 120 and requests a copy of the user profile 211 from the profile transmitting module 212. In either embodiment it is possible to transmit an update to the user profile 211 instead of the complete user profile 211. This saves bandwidth and also provides information on what has recently changed in the user's preferences.

The aggregation can be performed for various purposes and according to various criteria. For instance, when combining individual user profiles as obtained from receiving devices 120, 121, 122 according to a geographical criterion such as zip/area/postal code, city or country, highly accurate profiles are obtained for e-commerce delivery.
Targeted marketing campaigns can be set up in accordance with these profiles, using known methods of targeting geographically grouped consumers such as deducting an average income for consumers sharing the same postal code and sending out advertising materials that are likely to be bought by people having such an income. Other opportunities for using the aggregated profiles 221 will become apparent below.

The content aggregator 101 employs its own segment profiles 209 for a specific segment of the population to collect content suitable for that segment. These segment profiles 209 can be based on the aggregated profiles 221, which the aggregator obtains from the profiling center 220. However, by supplying the segment profiles 209 to the profiling center 220, the profiling center 220 can enhance the accuracy of its aggregated profiles 221. The information from the segment profiles 209 reveals for instance which genres or types of content are available, how they are bundled and how they are being made available. For instance, if the content aggregator 101 tracks the delivery of the content items he makes available, the profiling center 220 can correlate this information with the user profiles for the consumers who listened, watched, and/or bought those content items, and thereby can create enhanced profiles for these consumers. The aggregated information can be made available to the content aggregator 101 so that he can more accurately make his content available.

To illustrate what types of aggregation becomes possible in the arrangement 100 according to the invention, three illustrative embodiments are presented below.

In a first illustrative embodiment, the profiling center 220 obtains user profiles from receiving devices 120, 121, 122, which indicate which television programs the respective users like. Further, the profiling center 220 obtains segment profiles 209 from the aggregator 101, which indicate how individual television programs as obtained from content providers 103, 104, 105 are to be distributed through various television channels. The profiling center 220 now aggregates the information on which television programs users like to obtain groups of television programs that groups of users like. For instance, if according to the user profiles, people who like to watch *The Simpsons* also like to watch *Friends,* the profiling center 220 creates an aggregated profile for those people, indicating they like those two programs. These aggregated profiles are then compared to the segment profiles 209, to see if there is a correspondence. When it turns out that this is not the case, the segment profiles 209 are adjusted to more closely fit the aggregated profiles. For instance, it may be that *The Simpsons* is presently broadcast on a different channel than *Friends.* By changing the segment profiles 209 so that these two programs are broadcast on the same channel, that channel becomes more interesting to the group of users that like both programs. Thus, it becomes more likely that they will tune to that channel more often, making it more interesting for advertisers to place their advertisements on that channel when they want to reach that group. The demographics for that group are also known, as this is also derived by the aggregation operation on the user profiles of the members of the group.

In a second illustrative embodiment, the aggregated profiles 221 contain the information that two programs are very popular with one segment of the population, but the second program is always recorded and viewed later. When correlating this information with the segment profiles 209, it turns out that the two programs are broadcast at the same time on different channels. Once informed of this fact, the content aggregator 101 changes his programming so that the second program starts after the first program is finished. Now, people in that segment are more likely to view the two programs as they are broadcast, making it more likely that they will actively view the advertisements in between, and not fast-forward through them as they would with the recorded version. The profiling center 220 can verify this statement by repeating the aggregation operation described above, to see if the people in that segment still record the second program, or watch it in real-time.

In a third illustrative embodiment, the profiling center 220 obtains user profiles from receiving devices 120, 121, 122, which indicate which music the respective users like. The profiling center 220 aggregates these profiles into aggregated profiles 221, and generates "stereotype" user profiles based thereon. For instance, if an aggregated profile reveals that one group of girls aged 10-14 like music from boy bands like Boyzone, Westlife and the Moffatts, and other groups like music from Alanis Morissette, Anouk and Shania Twain, two stereotype user profiles for these groups can be generated, which reflect the respective likings. These stereotype user profiles can then be made available to the receiving devices 120, 121, 122, so that new users can choose one of them and immediately get the content they like. Such stereotypes reflect actual interests of actual user groups, making them more useful than artificially thought-up stereotypes or very generic stereotypes. This enhances the value of the receiving devices 120, 121, 122. It is advantageous to equip those receiving devices 120, 121, 122 with a module that can download these stereotypes from a server, so that the list of available stereotypes can be updated regularly.

The presentation of the stereotypes is preferably visual, for easy recognition and distinguishing of the stereotypes. The presentation of a stereotype is preferably adapted to the values of attributes of the stereotype. For example, of an attribute indicating the gender of the user has the value "male", the presentation could be adapted to show a male figure. If another attribute has a value indicating the user likes soccer, the representation of the male figure could be further adapted so it is shown wearing soccer attire.

The user profiles 211 may also contain information on the capabilities of the receiving device 120 and the rendering device 130, e.g. by indicating support for particular coding formats or compression schemes. By collecting this information, the profiling center 220 is able to reliably inform content aggregators 101, 102 which formats they should support or which have become obsolete. This saves the aggregators 101, 102 time and resources, since they then no longer need to make the content available in formats few consumers need. The same goes for the content owners 103, 104, 105 who can prepackage their content items in the supported formats.

Additional consumer information can be obtained from digital rights clearinghouse 230 and from financial clearinghouse 240. The rights clearinghouse 230 keeps track of the use of content items that are subject to intellectual property rights, such as copyright, neighboring rights, or similar rights. The rights holders for these content items typically receive a royalty for the use of the content items, but since it is impractical to make payments to individual rights holders, a rights clearinghouse 230 serves as a central location where royalties can be paid. The rights clearinghouse 230 then arranges for the redistribution of the collected royalties to the right holders. In the process of doing so, they collect information on which content items are being used, which information is stored in rights profile 231. This rights profile 231 can be used to determine which artists or which genres are popular, based on the royalty distribution.

The financial clearinghouse 240 takes care of the payments made by consumers in order to obtain content items. There are various ways in which a consumer can pay for content, such as a one-time payment, suitable for viewing a content item once, a subscription for unlimited access for a given time period to certain content items (such as a yearly subscription to a TV channel), or purchasing or renting a physical carrier comprising a content item. The information on which way certain consumers prefer can be very valuable for content aggregators in choosing the ways in which they make their offerings available. If few people in a certain segment pay through subscriptions, it would make sense for the aggregator to offer pay-per-view options for a content item targeted to that consumer segment. This information is recorded as financial profile 241.

The profiling center 220 collects the rights profile 231 and the financial profile 241 from the rights clearinghouse 230 and the financial clearinghouse 240, respectively, and aggregates the information therefrom in the aggregated profiles 221. The information from the rights profile 231 and the financial profile 241 can be used to establish a user profile on viewing, recording and purchasing behavior. This user profile can become a part of the aggregated profiles 221.

It will be clear that the aggregated profiles 221, due to their high accuracy, are very valuable to the content aggregator 101, and also to advertising agencies and other parties. Anyone who is in the business of distributing content to a segment of a large user group needs accurate profiles for the people that make up the segment, the profiles preferably being as detailed and fine-grained as possible. Thus, it makes good business sense for the profiling center 220 to sell the aggregated profiles 221 to any interested party for a fee. The profiling center 220 creates a recurring revenue opportunity by selling updated aggregated profiles 221 regularly.

An important aspect of this arrangement is the privacy of the individual consumer who participates in it. Since potentially very detailed information about his preferences is collected and distributed to a third party, he may very well be hesitant to use this feature. Various measures can be taken to encourage him to participate.

First, it is a known fact in marketing that people are willing to give up personal information in return for some kind of direct benefit. An interesting benefit for the user is the more accurate offering of content items by the aggregators based upon his own input. Next to this, rewards can be offered like a discount on his subscription in return for revealing his personal information, or one or more gift coupons or bonus "points" (such as Air Miles) which can be used to purchase items at a lower price. In fact, the whole point behind giving away free "points" with very purchase is to track consumer behavior.

Second, the consumer's device may be adapted so that the data sent to the profiling center 220 is anonymized first. Few applications require the user's name and exact address, so if the user chooses to be anonymous, this information will not be sent. Only information that is relevant for targeting purposes, such as his interests in particular content items, his gender or his age, is sent. It is preferred to explicitly ask the user if he wants personal information to be submitted, so that he can actively indicate his choice. This question can be combined with information on the above-mentioned offering. Being open about the amount of personal information that is being communicated helps to establish trust.

Third, the profiling center 220 can be certified by a trusted third party. The TTP can for instance be a consumer rights protection agency, or a (semi)governmental organization which enforces privacy regulations. This certification then serves as a guarantee to the consumer that his personal information will not be abused, and so encourages the consumer to participate in such a safe arrangement.

## Claims

1. An arrangement (100) for distributing content (200), comprising an aggregator (101) arranged for bundling the content (200) according to a segment profile (209) and distributing the content (200) to a receiving device (120),
the receiving device (120) comprising user profile maintenance means (210) for maintaining a user profile (211), and profile transmitting means (212) for transmitting the user profile (211) to a profiling center (220),
the profiling center (220) being arranged for aggregating user profiles (211) received from plural receiving devices (120) into an aggregated profile (221), and for making the aggregated profile (221) available to the aggregator (101) for use as the segment profile (209).

2. The arrangement (100) as claimed in claim 1, wherein metadata (201) related to the content (200) is embedded into the content (200) by means of a watermark.

3. A profiling center (220) for use in the arrangement (100) of claim 1, being arranged for aggregating user profiles (211) received from plural receiving devices (120) into an aggregated profile (221), and for making the aggregated profile (221) available to an aggregator (101) for use as a segment profile (209).

4. The profiling center (220) as claimed in claim 3, being further arranged to additionally aggregate a rights profile (231) received from a rights clearinghouse (230) into the aggregated profile (221).

5. The profiling center (220) as claimed in claim 3, being further arranged to additionally aggregate a financial profile (241) received from a financial clearinghouse (240) into the aggregated profile (221).

6. A. receiving device (120) for use in the arrangement (100) of claim 1, comprising user profile maintenance means (210) for maintaining a user profile (211), and profile transmitting means (212) for transmitting the user profile (211) to a profiling center (220).

7. The receiving device (120) as claimed in claim 6, wherein the profile transmitting means (212) are arranged for transmitting only a portion of the user profile (211) which has been modified since a previous transmission of the user profile (211).

8. A method of profiling consumer behavior, comprising receiving user profiles (211) from plural receiving devices (120), aggregating said received user profiles (211) into an aggregated profile (221), and making the aggregated profile (221) available to an aggregator (101) for use as a segment profile (209).

9. The method as claimed in claim 8, comprising additionally aggregating a rights profile (231) received from a rights clearinghouse (230) into the aggregated profile (221).

10. The method as claimed in claim 8, comprising additionally aggregating a financial profile (241) received from a financial clearinghouse (240) into the aggregated profile (221).
